# EUROPÄISCHE PATENTSCHRIFT

(11) **EP 1 887 020 B1**
(45) Veröffentlichungstag und Bekanntmachung des Hinweises auf die Patenterteilung: **06.11.2019**
(21) Anmeldenummer: 07113923.2
(22) Anmeldetag: 07.08.2007
(51) Int. Cl.: C08G 18/42, C08G 63/181

(54) **Polyurethanharze und Verfahren zu ihrer Herstellung**
Polyurethane resins and method for their production
Résine de polyuréthane et son procédé de fabrication

(30) Priorität: 08.08.2006 DE 102006038259
(43) Veröffentlichungstag der Anmeldung: 13.02.2008
(73) Patentinhaber: Performance Chemicals Handels GmbH, 21244 Buchholz (DE)
(72) Erfinder: Stoycheva, Vesela, 15745 Wildau (DE); Staabs, Burkhard, 14547 Beelitz (DE)
(74) Vertreter: Müller Schupfner & Partner Patent- und Rechtsanwaltspartnerschaft mbB

(56) Entgegenhaltungen:
- EP-A- 0 590 398
- EP-A- 1 484 350
- DE-B- 1 047 429

## Beschreibung

Diese Erfindung betrifft Polyurethanharze auf der Basis von aromatisch-aliphatischen Polyesteralkoholen sowie Verfahren zu ihrer Herstellung durch Umsetzung der Polyesteralkohole mit Di- und/oder Polyisocyanaten ggf. in Gegenwart von Additiven. Insbesondere betrifft diese Erfindung Polyurethanharze, die in Form von Ein- oder Zwei-Komponenten-Systemen zur Versiegelung, Verkapselung oder zur Herstellung von Kompositen eingesetzt werden können.

Die Herstellung von harten, hartelastischen oder hartspröden Polyurethanharzen ist bekannt. Nach dem Stand der Technik werden diese aus Polyetheralkoholen, Gemischen von Polyetheralkoholen und natürlichen Ölen (vor allem Ricinusöl) oder deren Derivaten oder aus Polyesteralkoholen sowie verschiedenen Additiven hergestellt. Solche Harze werden z.B. in der DE 196 07 470 A1 beschrieben. Dort ist dargestellt, dass Polyolkomponente und Polyisocyanat im Verhältnis 1:10 bis 10:1 umgesetzt werden, wobei Ricinusöl verwendet wird, das in Gegenwart eines basischen Lithiumsalzes erwärmt wurde und bis zu 100% in der Polyolkomponente enthalten ist. Dadurch wird eine Verlängerung der Gelzeit erreicht. Die Verlängerung der Gelzeit kann gemäß US 5,648,412 A durch latente Deaktivatoren für den Katalysator oder durch aktive Deaktivatoren erfolgen.

Nach einer weiteren technischen Lehre, die in der DE 31 24 199 A1 beschrieben ist, werden Polyurethanharze mit ausgezeichneten mechanischen und thermischen Eigenschaften, hoher Härte und guter Bindung von festen Additiven aus Polyesteralkoholen, Kettenverlängerern und Diisocyanaten hergestellt, wobei die Polyester aus 1,4-Cyclohexandimethanol und einer Dicarbonsäure wie Adipinsäure, Azelainsäure, Dodecandisäure oder deren Gemischen hergestellt werden.

Die Verwendung spezieller Diole wird in der DE 44 01 544 A1 beschrieben; die Diole weisen Verzweigungen in der Kohlenstoffkette auf, durch die die Hydrolysebeständigkeit verbessert werden soll. Eine ähnliche Lösung wird in der US 3,753,953 A dargestellt, nach der Polyester aus Adipinsäure und 2,2,4-Trimethylhexandiol-1,6 verwendet werden. In EP 1 650 239 A1 wird die Verwendung von Polyolen beschrieben, die zwischen 30 und 80 Gew.-% Oxyethylengruppen enthalten, von denen 10 bis 50 Gew.-% als innere Blöcke bezeichnet werden. Ein derart hoher Gehalt an Oxyethyleneinheiten führt jedoch zu einer hohen Wasseraufnahme, was in vielen Fällen unerwünscht ist.

Polyesteralkohole für Polyurethane basieren in vielen Fällen entweder auf Phthalsäure, Isophthalsäure, Terephthalsäure, Adipinsäure, Azelainsäure oder in selteneren Fällen auf Polyesteralkoholen aus Mischungen dieser Dicarbonsäuren oder aus Mischungen verschiedener Polyesteralkohole. Zur zweiten Gruppe zählt die US 2003/0022022 A1, wonach Polyurethanbindemittel aus a) Polyesterpolyolen der Molmasse unter 2000 auf der Basis aromatischer und alicyclischer Dicarbonsäuren und b) einem hochmolekularen Polyol mit einer Molmasse unter 5000 auf der Basis aliphatischer Dicarbonsäuren sowie Kettenverlängerern und Diisocyanaten hergestellt werden. Nach US 2004/0162359 A1 werden Polyurethan-Hartschaumstoffe aus aromatischen Polyesteralkoholen und Polyisocyanaten hergestellt.

Aus US 3,538,700 A ist bekannt Glassrowings mit thermoplastischen Polyurethanharzen zu imprägnieren, wobei die Polyurethanharze zur Imprägnierung auf der Basis von langkettigen Polyetheralkoholen hergestellt werden.

Nach US 3,242,108 A werden Polyurethanharze aus Komponenten auf der Basis von Epoxycarbonsäuren und/oder Epoxyalkoholen hergestellt, wobei sowohl aromatische als auch aliphatische Dicarbonsäuren verwendet werden können, jedoch keine Gemische aus beiden Typen der Dicarbonsäuren.

Weiterhin sind Verfahren bekannt, nach deren technischer Lösung Isocyanatpräpolymere verwendet werden, die aus Polyestern hergestellt werden können, siehe z.B. die GB 1,163,264 A. Ebenso können spezielle trifunktionelle Isocyanate verwendet werden, siehe z.B. US 4,247,675 A.

Nach der EP 0 248 570 A1 werden Copolyesteralkohole hergestellt, indem Polyethylenterephthalatabfälle mit überschüssigem Glykol aufgeschlossen werden und das Gemisch mit aliphatischen Dicarbonsäuren umgesetzt wird, so dass der Copolyester eine Molmasse zwischen 1000 und 4000 aufweist. Nach dieser Lehre werden Copolyesterpolyole mit Terephthalsäureeinheiten hergestellt, aus denen Polyurethane erzeugt werden. Die Stufen zur Herstellung der Polyesterpolyole nach dieser EP bestehen darin, a) Polyethylenterephthalat mit wenigstens einem Glykol der Molmasse 62 bis 118 umzusetzen und so ein Gemisch aus Glykolen und Terephthalsäureglykolestern herzustellen und b) dieses Produkt mit wenigstens einer aliphatischen Dicarbonsäure oder einem ihrer Ester und ggf. weiterem Glykol umzusetzen, so dass auf diesem Wege ein Polyesterpolyol mit statistisch verteilten Terephthalsäureeinheiten mit einer Molmasse im Bereich 1000 bis 4000 und 10 bis 60% Terephthalsäureeinheiten hergestellt wird. Die Umsetzungen werden in den für Ver- bzw. Umesterungen üblichen Temperaturbereichen ggf. in Gegenwart von Katalysatoren innerhalb von 10 bis 25 Stunden durchgeführt. Aus diesen Polyesteralkoholen werden durch Umsetzung mit Polyisocyanaten Polyurethane, z.B. Elastomere, mikrozellige Elastomere, Beschichtungen, Klebstoffe, Thermoplaste oder Weichschaumstoffe, hergestellt. Auf Grund des beanspruchten Molmassebereiches kann davon ausgegangen werden, dass nur elastische Produkte hergestellt werden. Nachteilig bei diesem Verfahren sind der Zweistufenprozess und die für jede Stufe angegebene lange Reaktionsdauer von über 10 Stunden.

EP 1484350 A2 offenbart lichtechte, hochviskose Klarlacke auf Basis von Polyisocyanaten und Polyesteralkoholen bzw. auf Basis von Polyesteralkohol-Alkohol-Gemischen, welche jedoch andere Triole und Triole und in anderen Mengen enthalten.

Der bisherige Stand der Technik stellt entweder thermoplastische, d. h. rein lineare elastische oder hartelastische, Polyurethane oder vernetzte Polyurethane mit einem hohen Vernetzungsgrad zur Verfügung, die in der Regel vollständig ausgehärtet sein müssen, um geeignete Eigenschaften zu besitzen. Schwach vernetzte Polyurethane, die trotz thermischer Härtung sowohl Hydroxylgruppen als auch Isocyanatgruppen in einem relativ hohen Prozentsatz enthalten und sich trotz der Vernetzung wie thermoplastische Harze verhalten, sind bisher nicht beschrieben worden.

Aufgabe der Erfindung ist es deshalb, weitere Polyurethanharze auf der Basis von Polyesteralkoholen als Ein- oder Zwei-Komponenten-Systeme zur Verfügung zu stellen. Dabei ist es wünschenswert, dass diese Harze bei einer schnellen Verarbeitung einen einstellbaren Umsetzungsgrad aufweisen und nach einem entsprechenden Härtungsvorgang ein hohes mechanisches Eigenschaftsniveau gewährleisten.

Erfindungsgemäß wird die Aufgabe dadurch gelöst, dass Polyurethanharze bereitgestellt werden, die durch Umsetzung von Di- und/oder Polyisocyanaten mit speziellen neuen Polyesteralkoholen gewonnen werden.

Die aromatisch-aliphatischen Polyesteralkohole bestehen aus
a) mindestens einer aromatischen Dicarbonsäure mit 25 bis 45 Gew.%,
b) mindestens einer aliphatischen Dicarbonsäure mit 3 bis 22 Gew.%,
c) einem oder mehreren Diolen zwischen 30 und 72 Gew.% und
d) einem oder mehreren Triolen zwischen 0,1 und 12 Gew.%, wobei die aliphatischen und aromatischen Dicarbonsäuren über ein oder mehrere Diole statistisch in der Kette verteilt und das bzw. die Triol(e) nur über die primären Hydroxylgruppen statistisch in der Kette verteilt sind. Weiterhin weisen diese Polyesteralkohole eine Molmasse von Mn 250 bis 750 sowie eine rechnerische Funktionalität fn zwischen 2,01 und 2,3 auf, wobei die Hydroxylzahlen zwischen 150 und 450 mg KOH/g liegen, wobei die Triole ausgewählt sind aus Glycerin, 1, 3, 6-Hexantriol, 1, 2, 6-Hexantriol, 1, 3, 8-Octantriol oder Gemischen davon.

Aromatische Dicarbonsäuren sind bevorzugt Terephthalsäure, Isophthalsäure oder Phthalsäure oder deren Gemische. Besonders bevorzugt ist dabei die Verwendung von Terephthalsäure als aromatischer Dicarbonsäure.

Als aliphatische Dicarbonsäuren dienen bevorzugt Adipinsäure, Bernsteinsäure, Azelainsäure, Undecandisäure oder deren Gemische.

Diole sind bevorzugt Diethylenglykol, Triethylenglykol, Tetraethylenglykol, höhere Polyethylenglykole oder Gemische davon. Triole sind Glycerin, 1,3,6-Hexantriol, 1,2,6-Hexantriol, 1,3,8-Octantriol oder Gemische davon.

Diese Polyesteralkohole werden mit Di- und/oder Polyisocyanaten in einer oder mehreren Stufen über definierte Temperaturen, vorzugsweise bei Temperaturen zwischen 10 und 220 °C und bevorzugt innerhalb von 10 Minuten bis 24 Stunden, umgesetzt. Die Di- bzw. Polyisocyanate sind bevorzugt ausgewählt aus 2,2'-Diphenylmethandiisocyanat, 4,4'-Diphenylmethandiisocyanat, 2,4'-Diphenylmethandiisocyanat, Gemischen davon oder polymeres Diphenylmethandiisocyanat unterschiedlicher Isocyanat-Funktionalitäten zwischen 2,4 und 5,0.

Erfindungsgemäß wird das bevorzugte Verfahren zur Herstellung der Polyurethane derart durchgeführt, dass die aromatisch-aliphatischen Polyesteralkohole mit einer Molmasse von Mn 250 bis 750 aus 3 bis 22 Gew.% aliphatischen Dicarbonsäureresten, 25 bis 45 Gew.% aromatischen Dicarbonsäureresten, 30 bis 72 Gew.% einem oder mehreren Diolen und 0,1 bis 12 Gew.% einem oder mehreren Triolen mit einer rechnerischen Funktionalität fn zwischen 2,01 und 2,3, die aus einer Umsetzung in einer Stufe aus aromatischen Dicarbonsäuren oder ihren Estern bzw. Polyestern, vorzugsweise Terephthalsäure bzw. Polyalkylenterephthalaten, Diolen, aliphatischen Dicarbonsäuren und Triolen, hergestellt, ggf. in Gegenwart von Reaktionsverzögerern oder Katalysatoren sowie ggf. in Gegenwart weiterer Zusatz- und/oder Verstärkungsstoffe bei einer Temperatur zwischen 10 °C und einer Temperatur unterhalb der Glasübergangstemperatur Tg vorgehärtet, zum Produkt geformt und danach bei einer Temperatur oberhalb Tg ausgehärtet werden, wobei die Triole ausgewählt sind aus Glycerin, 1, 3, 6-Hexantriol, 1, 2, 6-Hexantriol, 1, 3, 8-Octantriol oder Gemischen davon.

Die Reaktion erfolgt bevorzugt in Gegenwart von Reaktionsverzögerern, Katalysatoren, Additiven und/oder Verstärkungsstoffen.

Als Reaktionsverzögerer werden im Sinne vorliegender Erfindung vorzugsweise organische Phosphite, Toluolsulfonsäuremethylester oder Diketone, wie z.B. Acetylaceton, in einer Menge von 0,05 bis 1,0 Gew.-% eingesetzt.

Die Additive können in fester oder flüssiger Form vorliegen. Feste Additive sind z.B. Zeolithe, Kreide, Calcit, Schwerspat, Melamin, Melamincyanurat, Aluminiumoxidhydrat, Magnesiumoxid, Magnesiumhydroxid und Bariumsulfat.

Als Verstärkungsstoffe werden Chemie- und Naturfasern oder andere faserförmige Verstärkungsstoffe verwendet. Vorzugsweise handelt es sich dabei um Glasfasern, Cellulosefasern, Kohlenstofffasern, Aramidfasern, Gesteinsfasern, z.B. Basaltfasern, oder die Fasern umfassende Gewebe, Matten, Vliese und Gewirke.

Als Katalysatoren seien beispielsweise Di-(tertiäramino)harnstoffe oder Bis-(dialkylaminoalkyl)harnstoffe genannt, vorzugsweise wird Bis-(dibutylaminopropyl)harnstoff verwendet.

So wird z.B. das Polyurethanharz auf einen Härtungsgrad von 60 bis 85% vorgehärtet, mit einem Verstärkungsstoff vermischt und mit diesem gemeinsam dem Härtungsprozess unterworfen.

Insbesondere erfolgt die Umsetzung bei bevorzugten Temperaturen von 10 bis 150°C mit einem oder mehreren Di- und/oder Polyisocyanaten mit unterschiedlichen Temperaturen in einer ersten Stufe. Vorzugsweise werden die Produkte zwischen 15 Minuten und 15 Stunden bei bevorzugten Temperaturen zwischen 80 und 160°C in einer weiteren Stufe zu den Polyurethanharzen ausgehärtet.

Überraschend wurde gefunden, dass durch die Umsetzung dieser speziellen Copolyesteralkohole mit den Di- oder Polyisocyanaten harte Polyurethane gebildet werden, die ungewöhnliche Eigenschaften aufweisen, unter anderen
- einen Umsatz der Isocyanat- und Hydroxylgruppen, der bei vergleichsweise niederigem Umsetzungsgrad, z.B. zwischen 75 und 90 % des stöchiometrischen Umsatzes, nur durch das Härtungsregime gezielt angehalten werden kann,
- sehr hohe mechanische Festigkeiten bei vergleichsweise hoher Bruchdehnung,
- eine Segmentstruktur der Domänen, die ein Verstrecken der Polyurethanharze nach der Herstellung und/oder Aushärtung um bis zu 50% ihrer Länge erlaubt.

Die erfindungsgemäßen Polyurethanharze zeichnen sich auf Grund der besonderen Zusammensetzung der in ihnen als Hauptkomponente der Polyolseite verwendeten Polyesteralkohole durch eine besondere molekulare Struktur aus, da es einmal zu einer Vernetzung im Hartsegment über die Isocyanatkomponente kommt und zusätzlich zu einer extrem schwachen Vernetzung im "Weichsegment", wie der Rest des Polyesteralkohols bezeichnet werden kann, jedoch mit einer im Wesentlichen linearen Struktur durch die symmetrischen und in hohem Maße rigiden Aromaten aus der aromatischen Dicarbonsäure, die zu einer zusätzlichen Versteifung der makromolekularen Ketten führen und wesentlich die Tg bestimmen.

Der Wechsel der flexiblen Strukturelemente, insbesondere auch bestehend aus aliphatischer Dicarbonsäure und dem bzw. den Diolen hat eine außerordentliche Wirkung auf die Eigenschaften der erfindungsgemäßen Polyurethanharze:
- Die Struktur der verwendeten Polyesteralkohole erlaubt es, die Umsetzung der Hydroxyl- und der Isocyanatgruppen an einem vorher festgelegten Punkt beim oder oberhalb des Glasüberganges zu stoppen und damit bis zu 65 % der reaktiven Gruppen im Reaktionsprodukt über den vergleichsweise langen Zeitraum von mindestens sechs Monaten, in der Regel jedoch über zwölf Monate bis zu 2 Jahren, zu konservieren und in einer zweiten Reaktionsstufe zu aktivieren und weiter bis zu einem hohen Umsatzgrad in einer oder mehreren Stufen zu härten.
- Durch Krafteinwirkung auf eine Raumrichtung des Harzes kann eine Ausrichtung der Makromoleküle und ein Fließen in diese Richtung hervorgerufen werden, d. h. bei geeigneter Anordnung der Strukturelemente und der Verteilung der Vernetzungsstellen können verstreckbare Polyurethane hergestellt werden.

Diese neuen Strukturen in den Polyurethanharzen werden möglich durch den Einsatz der speziellen Polyesteralkohole mit einem bestimmten Verhältnis aromatischer und aliphatischer Dicarbonsäuren, die einen sehr niedrigen Verzweigungsgrad besitzen, d. h. ihre rechnerische Funktionalität fn liegt zwischen 2,01 und maximal 2,3. Polyesteralkohole dieser Art und daraus hergestellte Polyurethane mit solchen Eigenschaften sind bisher nicht beschrieben worden.

In einer bevorzugten Ausführungsvariante der Erfindung wird durch Vorhärtung bei einer Temperatur bis unterhalb der Glasübergangstemperatur ein Umsetzungsgrad von 65 bis 95 % eingestellt, das Produkt wird in eine gewünschte Form gebracht und anschliessend ausgehärtet.

In einer speziellen Ausgestaltung der Erfindung erfolgt die Reaktion einstufig, wobei die Reaktionskomponenten a) bis d) ggf. in Gegenwart eines Veresterungskatalysators, vorzugsweise 1 bis 1500 ppm, bei Temperaturen von 200 bis 260 ° C, ggf. unter Schutzgasatmosphäre innerhalb von 3 bis 8 Stunden zu einem Polyesteralkohol umgesetzt werden, und anschließend mit den Di- und/oder Polyisocyanaten im Endgruppenverhältnis 0,75 : 1 bis 1,25 : 1 in Gegenwart eines Reaktionsverzögerers zum Endprodukt umgesetzt werden.

Die erfindungsgemäß eingesetzten Polyesteralkohole werden bevorzugt in einer Ein-Stufen-Reaktion aus
- 30 bis 57 Gew.-% eines Polyalkylenterephthalats, z.B. Polyethylenterephthalat, Polytrimethylenterephthalat, Polybutylenterephthalat, Poly(cyclohexandimethyl)tereph-
- thalat, oder alternativ der äquivalenten Menge Terephthalsäure oder Dimethylterephthalat,
- 3 bis 22 Gew.% einer oder mehrerer aliphatischer Dicarbonsäuren, z.B. Adipinsäure, Bernsteinsäure, Azelainsäure, Undecandisäure,
- 30 bis 72 Gew.% einem oder mehreren Diolen, z.B. Diethylenglykol, Triethylenglykol, Tetraethylenglykol, höherer Polyethylenglykole oder Gemische davon,
- 0,1 bis 12 Gew.% einem oder mehreren Triolen, nämlichGlycerin, 1,2,6-Hexantriol, 1,3,6-Hexantriol, 1,3,8-Octantriol oder Gemischen davon und
- 1 bis 1500 ppm, vorzugsweise 1 bis 50 ppm, eines Veresterungskatalysators, z.B. Tetrabutylorthotitanat, Dibutylzinndilaurat, Zinndioctoat, Cobaltacetat, Zinkchlorid, Manganchlorid, Hexaalkylstannoxan oder einem anderen bekannten Veresterungskatalysator oder Gemischen davon bei Temperaturen bevorzugt zwischen 220 und 250 °C, innerhalb von 3 bis 8 Stunden unter einer Schutzgasatmosphäre als statistische Polyesteralkohole mit Hydroxylzahlen zwischen 150 und 450 mg KOH/g hergestellt. Niedermolekulare Verbindungen, z.B. Wasser und Alkohole (Methanol) oder Ethylenglycol, werden abdestilliert.

In einer bevorzugten Verfahrensvariante werden aus Polyesteralkohol, Reaktionsverzögerern, Katalysatoren, Additiven und/oder Verstärkungsstoffen ein erstes Komponentengemisch hergestellt, welches mit den Di- und/oder Polyisocyanaten vermischt und ausgehärtet wird. Besonders bevorzugt wird das Komponentengemisch aus 70 bis 99,9 Teilen (Gew.-%) Polyesteralkohol, 0 bis 0,7 Teilen Reaktionsverzögerer und 0 bis 30 Teilen festem oder flüssigem Additiv hergestellt und dann mit den Di- und/oder Polyisocyanaten im Endgruppenverhältnis 1:1,15 bis 0,85:1 vermischt und ausgehärtet.

Es ist ein besonderer Vorteil des erfindungsgemäßen Verfahrens, dass in einer Ausführungsvariante der Erfindung das erstarrte (nicht gehärtete) Produkt zur Formgebung mechanisch verformt, zerkleinert, vermahlen oder mit anderen Verfahrensoperationen die physikalische Erscheinung verändert wird, und ggf. nach einer Lagerzeit von bis zu 2 Jahren in einer zweiten Stufe vorzugsweise innerhalb von 20 Minuten bis 10 Stunden bei einer Temperatur oberhalb der Tg im Wesentlichen vollständig ausgehärtet wird.

Werden z.B. Verstärkungsstoffe zugesetzt, so werden die Polyurethanharze mit Natur- oder Chemiefasern vermischt, vorzugsweise durch Aufbringen auf ein entsprechendes Gewebe, eine Matte, ein Vlies oder ein Gewirk; durch Temperatureinwirkung erfolgt ein Einschmelzen in dieses, wobei in einer zweiten Reaktionsstufe unter Einwirkung von einem Druck zwischen 0,1 und 100 Bar bei einer Temperatur von 75 bis 200°C innerhalb von 10 Minuten bis fünf Stunden ausgehärtet wird.

Entscheidend für die ungewöhnliche Struktur der mit Di- oder Polyisocyanaten aus den Polyesteralkoholen hergestellten Polyurethane ist einmal das Verhältnis der aliphatischen zu den aromatischen Dicarbonsäureresten, das nach der oben dargestellten Herstellungsvorschrift bevorzugt zwischen 1 : 20 und 1: 1,5 liegt und dieses Verhältnisses zur Molmasse und zum Verzweigungsgrad der Polyesteralkohole. Je höher die Hydroxylzahl des Polyesteralkohols, desto höher sollte der Aromatengehalt des Polyesteralkohols sein, je niedriger die Hydroxylzahl des Polyesteralkohols desto höher sollte das Verhältnis der aliphatischen (AA) zu den aromatischen (AR) Dicarbonsäureresten sein. In der folgenden Tabelle sind einige Beispiele aufgeführt, um diese Darstellungen zu erläutern:

| Beispiel | 10 | 11 | 12 | 13 | 14 |
|---|---|---|---|---|---|
| Hydroxylzahl (mg KOH/g) | 420 | 380 | 320 | 240 | 150 |
| Funktionalität | 2,05 | 2,08 | 2,09 | 2,11 | 2,15 |
| Aromatengehalt (%) | 19,5 | 18,4 | 18,3 | 16,8 | 17,1 |
| Verhältnis AA : AR | 1: 20 | 1 : 6,3 | 1 : 4,7 | 1 : 1,3 | 1 : 1,2 |

Die Flexibilität der Polyurethanharze (gemessen als Bruchdehnung) und die thermische Stabilität werden über diese Parameter eingestellt. Die Verarbeitbarkeit der Polyurethansysteme wird durch deren Viskosität, die durch die Polyesteralkohole bestimmt wird, festgelegt und liegt vorzugsweise unter 10.000 mPas (25°C). Über den Gehalt an aliphatischer Dicarbonsäure wird die Viskosität der Polyesteralkohole eingestellt; das Verhältnis von aromatischer Dicarbonsäure, bevorzugt Polyalkylenterephthalat, zu den eingesetzten Diolen und Triolen bestimmt im Wesentlichen die Hydroxylzahl.

Die Reaktivität der Polyesteralkohole, gemessen durch Umsetzung mit polymerem 4,4'-Diphenylmethan-diisocyanat (p-MDI, z.B. Lupranat® M20S der BASF AG), wird durch die nahezu 100 % primären Hydroxylgruppen der Polyesteralkohole bestimmt. Sie liegt in der Regel für eine Verarbeitung zu hoch. Die Reduzierung der Reaktivität und die Verlängerung der Topfzeit sind daher erforderlich. Dies wird durch den bevorzugten Zusatz von Reaktionsverzögerern erreicht. Solche Reaktionsverzögerer sind nach dem Stand der Technik bekannt; es handelt sich in der Regel um saure Verbindungen, z.B. Mineralsäuren oder Lewis-Säuren. Es wurde gefunden, dass Mineralsäuren, z.B. Phosphorsäure oder Schwefelsäure, eine geringe Verlängerung der Topfzeit bewirken, durch saure Ester, z.B. Orthoformiate oder Phosphonsäureester, ebenfalls nur eine geringfügige Verzögerung der Umsetzung erreicht wird, dass jedoch Diketone, bevorzugt Acetylaceton, eine ausreichend lange Topfzeit einzustellen erlauben, wenn diese in einer Menge von 0,05 bis 1,0 Gew.-% bezogen auf das System, bevorzugt 0,1 bis 0,4 Gew.-%, eingesetzt werden. Bei 0,25 Gew.-% wird z.B. eine Verlängerung der Topfzeit von 30 Sekunden auf 300 Sekunden erreicht.

Die erfindungsgemäßen Polyurethane werden deshalb bevorzugt durch Umsetzung der Polyesteralkohole und eines oder mehrerer Di- oder Polyisocyanate im Equivalentverhältnis von 0,75 : 1 bis 1,25 : 1 in Gegenwart eines Reaktionsverzögerers mit einer Menge von 0,05 bis 1,0 Gew.-% hergestellt. Die Herstellung kann bei Temperaturen von 10°C bis 220°C erfolgen. Durch die Wahl der Temperatur und der Reaktionsdauer wird der Grad der Umsetzung bestimmt. Werden die Systeme z.B. bei 120°C hergestellt und eine Stunde bei dieser Temperatur gehalten, wird ein Umsetzungsgrad von etwa 83 % erreicht, d. h. auch im festen Polyurethanharz sind sowohl freie Hydroxylgruppen als auch freie Isocyanatgruppen vorhanden. Bei erneutem Erwärmen des Polyurethanharzes, ggf. nach einer mechanischen Behandlung, kann bei Temperaturen von mehr als 130°C eine Erhöhung des Umsetzungsgrades auf bis zu 98 % erreicht werden.

Eine Ausführungsform der Erfindung besteht demzufolge darin, das Polyurethanharz nach einer Vorhärtung, durch die ein Umsetzungsgrad von 65 bis 95 %, vorzugsweise von 75 bis 95 % eingestellt wird, mechanisch zu verformen, zu zerkleinern, zu vermahlen oder eine andere Verfahrensoperation zur Veränderung der physikalischen Erscheinung durchzuführen und in einer zweiten Stufe ggf. in Gegenwart weiterer Additive, vorzugsweise von festen Füllstoffen, flüssigen Additiven oder Verstärkungsstoffen bei einer Temperatur von 120 bis 180°C innerhalb von 10 bis 0,2 Stunden im Wesentlichen vollständig auszuhärten. Durch das erfindungsgemäße Verfahren werden nach dieser Ausführungsform Mahlgüter mit einem Restgehalt beider reaktiver Gruppen von 5 bis 35 % erhalten, die durch eine thermische Behandlung zu im Wesentlichen vollständig ausgehärteten, mechanisch hochwertigen Polyurethanharzen umgesetzt werden. In einer speziellen Ausführungsform dieses Verfahrens werden Mahlgüter mit 5 bis 25 % Restgruppen mit Glasfasern in Form von Langfasern, Rowings, Geweben, Vliesen, Gewirken, Zöpfen oder Matten vermischt und unter Druck und Temperaturen von 130 bis 180°C innerhalb von 1 Stunde bis 5 Minuten zu verstärkten Formkörpern verarbeitet.

In einer weiteren Ausführungsform des erfindungsgemäßen Verfahrens werden zwei Komponenten bestehend aus
a) der entsprechenden Menge des Polyesteralkohols und ggf. eines Reaktionsverzögerers und/oder fester Additive in Anteilen von 99,9 bis 70 Teilen Polyesteralkohol, 0 bis 0,7 Teilen des Reaktionsverzögerers und 0 bis 30 Teilen fester Additive, z.B. Zeolith, Kreide, Calcit, Schwerspat, Melamin, Melamincyanurat oder Aluminiumhydrat in fein vermahlener Form, so dass eine Sedimentation weitgehend vermieden wird, und
b) der entsprechenden Menge Polyisocyanat, z.B. 2,2'-Diphenylmethandiisocyanat, 4,4'-Diphenylmethandiisocyanat, 2,4'-Diphenylmethandiisocyanat, Gemische dieser, polymeres Diphenylmethandiisocyanat unterschiedlicher Isocyanat-Funktionalitäten zwischen 2,4 und 5,0
miteinander im geeigneten Mischungsverhältnis der Äquivalente von 1 : 1,15 bis 0,85 : 1 vermischt und bei einer geeigneten Temperatur ausgehärtet.

In einer weiteren Ausführungsform des erfindungsgemäßen Verfahrens werden zwei Komponenten bestehend aus
a) der entsprechenden Menge des Copolyesteralkohols mit geeigneten Additiven zur Einstellung der Reaktionsgeschwindigkeit, die Reaktionsverzögerer oder Katalysatoren sein können, und
b) der entsprechenden Menge Polyisocyanat, z.B. 2,2'-Diphenylmethandiisocyanat, 4,4'-Diphenylmethandiisocyanat, 2,4'-Diphenylmethandiisocyanat, Gemische der beiden, polymeres Diphenylmethandiisocyanat unterschiedlicher Isocyanat-Funktionalitäten zwischen 2,4 und 5,0
mittels üblicher Polyurethan-Mischmaschinen verarbeitet und unter Formgebung aus dem Mischaggregat ausgetragen. Als Katalysatoren werden hier vorzugsweise tertiäre Aminkatalysatoren, die in der Polyurethanchemie gut bekannt sind, Di-(tertiäramino)harnstoffe oder Bis-(dialkylaminoalkyl)harnstoffe, vorzugsweise Bis-(dibutylaminopropyl)harnstoff und/oder metallorganische Verbindungen, z.B. auf Basis Zinn, Blei, Titan, Wismut, Germanium oder Kupfer, verwendet. Die Polyurethan-Verarbeitungsmaschinen sind dem Fachmann gut bekannt. Sie bestehen aus mindestens zwei Vorratsbehältern, die über Schlauchpakete mit einer Mischvorrichtung verbunden sind.

Zur Durchführung des erfindungsgemäßen Verfahrens werden Mischmaschinen für drei Komponenten bevorzugt, bei denen die Polyesteralkohole eine Komponente, die Zusatzstoffe die zweite Komponente und die Isocyanate die dritte Komponente darstellen. In den Gemischstrahl können die festen Additiven eingegeben werden.

Die erfindungsgemäßen Polyurethanharze können als Vergussmassen, Beschichtungen, Bindemittel, Matrixharze in Kompositwerkstoffen, zur Imprägnierung von Fasern, zur Herstellung von Faserverbundwerkstoffen, als Klebstoffe - Schmelz- und Lösungsklebstoffe - eingesetzt werden.

Gegenstand der Erfindung sind auch die aromatisch-aliphatischen Polyesteralkohole mit einer Molmasse von Mn 250 bis 750 sowie einer rechnerischen Funktionalität fn zwischen 2,01 und 2,3 bestehend aus
a) 25 bis 45 Gew.% mindestens einer aromatischen Dicarbonsäure,
b) 3 bis 22 Gew.% mindestens einer aliphatischen Dicarbonsäure,
c) 30 bis 72 Gew.% eines Diols oder mehrerer Diole,
d) 0,1 und 12 Gew.% eines Triols oder mehrerer Triole,
wobei die aliphatischen und aromatischen Dicarbonsäuren über die Diole statistisch in der Kette verteilt vorliegen und die Triole nur über die primären Hydroxylgruppen statistisch in der Kette verteilt sind, so dass die Hydroxylzahlen bei 150 bis 450 mg KOH/g liegen , wobei die Triole ausgewählt sind aus Glycerin, 1, 3, 6-Hexantriol, 1, 2, 6-Hexantriol, 1, 3, 8-Octantriol oder Gemischen davon.

Die neuen Polyesteralkohole sind hergestellt durch Vermischen der Komponenten a) bis d) vorzugsweise in Gegenwart eines Veresterungskatalysators bei Temperaturen von 200 bis 260 °C unter Schutzgasatmosphäre und Abdestillieren niedermolekularer Verbindungen innerhalb von 3 bis 8 Stunden.

### Beispiele

### Beispiel 1:

### Herstellung eines erfindungsgemäßen Polyesteralkohols

In einen 100 1-Edelstahlreaktor mit Rührer, Heizmantel, Bodenablass, Destillationskolonne und Stickstoffeinleitung werden 26,2 kg Diethylenglykol, 3,5 kg Glycerol und 21 g Dibutylzinndilaurat gegeben und der Stickstoffstrom mit 90 ml/min geöffnet. Das Gemisch wird auf 185°C erwärmt, und bei dieser Temperatur werden 3,4 kg Adipinsäure zugegeben. Während die Reaktortemperatur langsam auf 210°C gesteigert wird, werden 505 g Wasser abdestilliert. Danach werden 26,1 kg PET in Form eines Granulats zugegeben. Das Gemisch wird langsam auf 250°C erwärmt und 4 Stunden bei dieser Temperatur gehalten. In dieser Zeit werden 5,8 kg Destillat erhalten. Es wird ein Copolyesteralkohol mit der Hydroxylzahl 360 mg KOH/g, der Säurezahl 0,8 mg KOH/g und der Viskosität 4.200 mPas (25°C) erhalten.

### Beispiele 2 bis 8:

### Herstellung weiterer erfindungsgemäßer Polyesteralkohole

Analog wurden weitere Polyesteralkohole hergestellt (siehe Tabelle) :

| Beispiel | 2 | 3 | 4 | 5 | 6 | 7 | 8 |
|---|---|---|---|---|---|---|---|
| Zusammensetzung (%) | | | | | | | |
| DEG | 37,7 | 38,9 | 49,6 | 38,9 | 44,5 | 38,9 | 37,5 |
| PET | 43,1 | 41,4 | 41,9 | 40,1 | 48,5 | 40,9 | 41,5 |
| Glycerin | 2,0 | 2,5 | 2,0 | 2,.0 | 4,0 | 4,0 | 3,0 |
| Katalysator | 0,02¹⁾ | 0,005²⁾ | 0,003¹⁾ | 0,003³⁾ | 0,002²⁾ | 0,002⁴⁾ | 0,001¹⁾ |
| ADS | 17,2 | 17,2 | 6,5 | 19,0 | 3,0 | 17,2 | 18,0 |
| OH-Zahl (mg KOH/g) | 200 | 220 | 320 | 320 | 380 | 137 | 212 |
| Viskosität (mPas, 25°C) | 17.200 | 7.730 | 3.200 | 4.200 | 2.850 | 37.000 | 14.560 |
| Säurezahl (mg KOH/g) | 0,5 | 0,5 | 0,4 | 0,8 | 0,5 | 0,8 | 0,5 |

| | | | | | | | |
|---|---|---|---|---|---|---|---|
| Katalysatoren: 1) Dibutylzinndilaurat, 2) Stannoxan, 3) Gemisch aus Cobaltacetat und Stannoxan, 4) Zinndioctoat | | | | | | | |

### Beispiel 9

In einen 400 l-Edelstahlreaktor mit Rührer, Heizmantel, Bodenablass, Destillationskolonne und Stickstoffeinleitung werden 152 kg Diethylenglykol, 11 kg Glycerol und 60 g Zinndioctoat gegeben und der Stickstoffstrom mit 70 ml/min geöffnet. Das Gemisch wird auf 185°C erwärmt, und bei dieser Temperatur werden 61 kg Adipinsäure zugegeben. Während die Reaktortemperatur langsam auf 210°C gesteigert wird, werden 7525 g Wasser abdestilliert. Danach werden 154 kg Dimethylterephthalat innerhalb von 2 Stunden zugegeben und das Reaktionsgemisch dabei langsam auf 250°C erwärmt und 4 Stunden bei dieser Temperatur gehalten. In dieser Zeit werden 25,1 kg Destillat (Methanol) erhalten. Es wird ein Copolyesteralkohol mit der Hydroxylzahl 260 mg KOH/g, der Säurezahl 0,6 mg KOH/g und der Viskosität 7.250 mPas (25°C) erhalten.

### Beispiele 10 bis 14

Nach dem Verfahren von Beispiel 1 werden durch entsprechende Verhältnisse der aliphatischen und aromatischen Dicarbonsäuren folgende Polyesteralkohole hergestellt:

| Beispiel | 10 | 11 | 12 | 13 | 14 |
|---|---|---|---|---|---|
| Hydroxylzahl (mg KOH/g) | 420 | 380 | 320 | 240 | 150 |
| Funktionalität | 2,05 | 2,08 | 2,09 | 2,11 | 2,15 |
| Aromatengehalt (%) | 19,5 | 18,4 | 18,3 | 16,8 | 17,1 |
| Verhältnis AA : AR | 1: 20 | 1 : 6,3 | 1 : 4,7 | 1 : 1,3 | 1 : 1,2 |

### Beispiele 15 - 17:

### Polyesteralkohole mit unterschiedlichem Gehalt an aliphatischer Dicarbonsäure

Wie in Beispiel 1 wurden Polyesteralkohole mit unterschiedlichem Gehalt an aliphatischer Dicarbonsäure (Adipinsäure) hergestellt, um die Viskosität bei 25°C unter 10.000 mPas einzustellen. Um diesen Effekt deutlich abzubilden, wurde auf eine breite Variation der Zusammensetzung der aromatischen Polyesteralkohole verzichtet und im Wesentlichen nur die Mengen an PET und Adipinsäure eingestellt.

| Parameter/ Beispiel | 15 | 16 | 17 |
|---|---|---|---|
| Zusammensetzung (%) | | | |
| | | | |
| Diethylenglykol | 38,1 | 38,7 | 40,1 |
| PET | 42,9 | 42,6 | 40,5 |
| Adipinsäure | 16,7 | 17,2 | 16,5 |
| Glycerol | 2,3 | 1,5 | 2,9 |
| Katalysator | 0,002 ¹⁾ | 0,002 ¹⁾ | 0,0018 ¹⁾ |
| OH-Zahl (mg KOH/g) | 227 | 226 | 232 |
| Viskosität (mPas, 25°C) | 14.560 | 10.700 | 6.930 |
| Säurezahl (mg KOH/g) | 0, 6 | 0,55 | 0,7 |
| Rechnerische Funktionalität | 2,08 | 2,05 | 2,10 |

| | | | |
|---|---|---|---|
| Katalysator: 1) Dibutylzinndilaurat | | | |

### Beispiel 18:

### Herstellung eines erfindungsgemäßen Polyurethanharzes

255 g des Polyesteralkohols aus Beispiel 17 werden mit 0,5 g Acetylaceton versetzt und eine Stunde bei Zimmertemperatur gerührt. Danach wird bei 80°C/1 Torr unter Rühren eine Stunde entgast. 137 g Lupranat® M20S werden ebenfalls 1 Stunde bei 80°C/1 Torr entgast. Nach dem Abkühlen auf 40°C werden 51 g des vorbereiteten Polyesteralkohols und 27,5 g des Polyisocyanats unter Rühren 1 Minute vermischt und unmittelbar danach in eine PTFE-Form, die auf 90°C vorgewärmt war, vergossen. Das Gemisch wird 1 Stunde bei 120°C im Wärmeschrank vorgehärtet.

Danach wird die Form abgekühlt und die Platte von 200 x 100 x 4 mm entnommen. Es ist eine glasklare, gelbbraun gefärbte, klebfreie Platte. Die freien Restgruppen (IR- und DSC-Bestimmung) werden mit 17,5 % gefunden.

Ein Streifen der Platte wird bei 150°C weitere vier Stunden gehärtet. Danach beträgt der Gehalt freier Restgruppen 2,7 %. Der Rest der Platte wird in einer Stiftmühle auf eine Korngröße von 2 mm vermahlen. 100 g des Mahlgutes werden in eine beheizbare Form gegeben und bei 150°C 30 Minuten mit einem Druck von 20 kp/cm² verpresst. Danach beträgt der Gehalt freier Restgruppen 3,3 %.

### Beispiele 19-22:

### Herstellung erfindungsgemäßer Polyurethanharze

500 g des Polyesteralkohols aus Beispiel 17 werden mit 1,5 g Acetylaceton versetzt und eine Stunde bei Zimmertemperatur gerührt. Danach wird bei 80°C/1 Torr unter Rühren eine Stunde entgast.

280 g Lupranat® M20S sowie 250 g eines flüssigen rein-MDI mit ca. 23 % 2,4'-Isomerem werden ebenfalls 1 Stunde bei 80°C/1 Torr entgast. Nach dem Abkühlen auf 40°C werden die unten angegebenen Mengen unter Rühren 1 Minute vermischt und unmittelbar danach in eine PTFE-Form, die auf 90°C vorgewärmt war, vergossen. Das Gemisch wird 4 Stunden bei 130°C im Wärmeschrank gehärtet. Danach wird die Form abgekühlt und die Platte von 200 x 100 x 4 mm entnommen. Es ist eine glasklare, gelbbraun gefärbte, klebfreie Platte.

| Bestandteil/Beispiel | 19 | 20 | 21 | 22 |
|---|---|---|---|---|
| Polyesteralkohol aus Beispiel 11 (%) | 65,25 | 66,88 | 64,2 | 65,75 |
| Acetylaceton (%) | 0,25 | 0,25 | 0,25 | 0,25 |
| p-MDI (%) | 34,5 | 0 | 35,55 | 0 |
| Rein-MDI (%) | 0 | 32,87 | 0 | 34,00 |
| Isocyanat-Index | 101 | 101 | 100 | 101 |
| freien Restgruppen (%) | 11,2 | 7,8 | 9,7 | 8,0 |
| freien Restgruppen (%) nach 2. Härtung | 3,9 | 2,6 | 2,9 | 2,5 |

Ein Teil der Platten wurde jeweils abgetrennt und weitere drei Stunden bei 145°C behandelt. Danach ist der Gehalt der freien Restgruppen von durchschnittlich 9 % auf unter 4 % gesunken und die Polyurethanharze können als ausgehärtet gelten.

Von der Platte aus Beispiel 22 wurden Streifen von 100 x 10 x 4 mm geschnitten. Einige der Streifen wurden in einer Universalprüfmaschine einer Dehnung von 20 % ausgesetzt. Dabei erfolgte kein Bruch des Streifens sondern der Streifen verlängerte sich um diesen Betrag, er wurde gedehnt bzw. verstreckt. Die Polyurethanharze der Beispiele 19 und 21 wurden der mechanischen Prüfung in der Universalprüfmaschine (Zwick GmbH) unterworfen und folgende Ergebnisse erzielt:

| Eigenschaft/Nr. | 19 | 21 |
|---|---|---|
| Zugfestigkeit (N/mm²) | 47,1 | 56,9 |
| Bruchdehnung (%) | 3,1 | 3,2 |
| E-Modul (N/mm²) | 2747 | 2311 |
| Biegefestigkeit (N/mm²) | 88,5 | 68,7 |
| Durchbiegung (%) | 5,1 | 5, 8 |
| E-Modul (N/mm²) | 2507 | 1620 |

Diese Werte zeigen die sehr hohen Festigkeitswerte der erfindungsgemäßen Polyurethane.

## Patentansprüche

1. Polyurethanharze als Ein- oder Zwei-Komponenten-System auf der Basis aromatisch-aliphatischer Polyesteralkohole und Di- und/oder Polyisocyanaten, wobei die aromatisch-aliphatischen Polyesteralkohole eine Molmasse von Mₙ 250 bis 750 sowie eine rechnerische Funktionalität fₙ zwischen 2,01 und 2,3 aufweisen und bestehen aus
a) 25 bis 45 Gew. % mindestens einer aromatischen Dicarbonsäure,
b) 3 bis 22 Gew. % mindestens einer aliphatischen Dicarbonsäure,
c) 30 bis 72 Gew. % eines Diols oder mehrerer Diole,
d) 0,1 und 12 Gew. % eines Triols oder mehrerer Triole,
und die aliphatischen und aromatischen Dicarbonsäuren über die Diole statistisch in der Kette verteilt vorliegen und die Triole nur über die primären Hydroxylgruppen statistisch in der Kette verteilt sind, so dass die Hydroxylzahlen zwischen 150 und 450 mg KOH/g liegen, wobei die Triole ausgewählt sind aus Glycerin, 1, 3, 6-Hexantriol, 1, 2, 6-Hexantriol, 1, 3, 8-Octantriol oder Gemischen davon.

2. Polyurethanharze nach Anspruch 1, **dadurch gekennzeichnet, dass** die aromatischen Dicarbonsäuren Terephthalsäure, Isophthalsäure oder Phthalsäure oder deren Gemische sind.

3. Polyurethanharze nach Anspruch 1 und 2, **dadurch gekennzeichnet, dass** die aliphatischen Dicarbonsäuren Adipinsäure, Bernsteinsäure, Azelainsäure, Undecandisäure oder deren Gemische sind.

4. Polyurethanharze nach einem der Ansprüche 1 bis 3, **dadurch gekennzeichnet, dass** die Diole Diethylenglykol, Triethylenglykol, Tetraethylenglykol, höhere Polyethylenglykole oder Gemische davon sind.

5. Polyurethanharze nach einem der Ansprüche 1 bis 4, **dadurch gekennzeichnet, dass** die Di- bzw. Polyisocyanate ausgewählt sind aus 2,2'-Diphenylmethandiisocyanat, 4,4'-Diphenylmethandiisocyanat, 2,4'-Diphenylmethandiisocyanat, Gemische davon, oder polymeres Diphenylmethandiisocyanat unterschiedlicher Isocyanat-Funktionalitäten zwischen 2,4 und 5,0.

6. Verfahren zur Herstellung von Polyurethanharzen nach einem der Ansprüche 1 bis 5, **dadurch gekennzeichnet, dass** aromatisch-aliphatische Polyesteralkohole gemäß einem der Ansprüche 1 bis 4 eingesetzt bzw. hergestellt werden, mit einem oder mehreren Di- und/oder Polyisocyanaten vermischt und anschließend die Polyurethanharze ausgehärtet werden, wobei die Umsetzung einstufig oder mehrstufig über definierte Temperaturstufen erfolgt, wobei die Triole Glycerin, 1,3,6-Hexantriol, 1,2,6- Hexantriol, 1,3,8-Octantriol oder Gemische davon sind.

7. Verfahren nach Anspruch 6, **dadurch gekennzeichnet, dass** die Reaktion in Gegenwart von Reaktionsverzögerern, Katalysatoren, Additiven und/oder Verstärkungsstoffen erfolgt.

8. Verfahren nach einem der Ansprüche 6 bis 7, **dadurch gekennzeichnet, dass** die Umsetzung bei Temperaturen zwischen 10 und 220°C innerhalb von 10 Minuten bis 24 Stunden durchgeführt wird.

9. Verfahren nach einem der Ansprüche 6 bis 8, **dadurch gekennzeichnet, dass** die Polyesteralkohole mit den Di- und/oder Polyisocyanaten bei einer Temperatur zwischen 10°C und einer Temperatur unterhalb der Glasübergangstemperatur Tg vorgehärtet, zum Produkt geformt und danach bei einer Temperatur oberhalb von Tg ausgehärtet werden.

10. Verfahren nach einem der Ansprüche 6 bis 9, **dadurch gekennzeichnet, dass** durch Vorhärtung bei einer Temperatur bis unterhalb der Glasübergangstemperatur ein Umsetzungsgrad von 65 bis 95 % eingestellt wird, das Produkt in eine gewünschte Form gebracht und anschließend ausgehärtet wird.

11. Verfahren nach einem der Ansprüche 6 bis 10, **dadurch gekennzeichnet, dass** die Reaktion einstufig erfolgt, wobei die Reaktionskomponenten a) bis d) ggf. in Gegenwart eines Veresterungskatalysators, vorzugsweise 1 bis 1500 ppm, bei Temperaturen von 200 bis 260°C, ggf. unter Schutzgasatmosphäre innerhalb von 3 bis 8 Stunden zu einem Polyesteralkohol umgesetzt werden, und anschließend mit Di- und/oder Polyisocyanaten im Endgruppenverhältnis 0,75 : 1 bis 1,25 : 1 in Gegenwart eines Reaktionsverzögerers zum Endprodukt umgesetzt werden.

12. Verfahren nach einem der Ansprüche 6 bis 11, **dadurch gekennzeichnet, dass** aus Polyesteralkohol, Reaktionsverzögerern, Katalysatoren Additiven und/oder Verstärkungsstoffen ein erstes Komponentengemisch hergestellt wird, welches mit den Di- und/oder Polyisocyanaten vermischt und ausgehärtet wird.

13. Verfahren nach einem der Ansprüche 6 bis 12, **dadurch gekennzeichnet, dass** aus 70 bis 99,9 Teilen (Gew.-%) Polyesteralkohol, 0 bis 0,7 Teilen Reaktionsverzögerer und 0 bis 30 Teilen festem oder flüssigem Additiv ein Komponentengemisch hergestellt wird und mit Di- und/oder Polyisocyanaten im Endgruppenverhältnis 1:1,15 bis 0,85:1 Gemisch zu Isocyanat vermischt und ausgehärtet werden.

14. Verfahren nach einem der Ansprüche 6 bis 13, **dadurch gekennzeichnet, dass** das Produkt zur Formgebung mechanisch verformt, zerkleinert, vermahlen oder mit anderen Verfahrensoperationen die physikalische Erscheinung verändert wird, und ggf. nach einer Lagerzeit in einer zweiten Stufe innerhalb von 20 Minuten bis 10 Stunden bei einer Temperatur oberhalb der Tg im Wesentlichen vollständig ausgehärtet wird.

15. Verfahren nach einem der Ansprüche 6 bis 14, **dadurch gekennzeichnet, dass** als Reaktionsverzögerer organische Phosphite, Toluolsulfonsäuremethylester oder Diketone, wie z.B. Acetylaceton, in einer Menge von 0,05 bis 1,0 Gew.-% eingesetzt werden, vorzugsweise Acetylaceton.

16. Verfahren nach einem der Ansprüche 6 bis 15, **dadurch gekennzeichnet, dass** die Reaktion in Gegenwart von Additiven in fester oder flüssiger Form und/oder Verstärkungsstoffen durchgeführt wird.

17. Verfahren nach einem der Ansprüche 6 bis 16, **dadurch gekennzeichnet, dass** als feste Additive Zeolithe, Kreide, Calcit, Schwerspat, Melamin, Melamincyanurat, Aluminiumoxidhydrat, Magnesiumoxid, Magnesiumhydroxid, und/oder Bariumsulfat eingesetzt werden.

18. Verfahren nach einem der Ansprüche 6 bis 17, **dadurch gekennzeichnet, dass** als Verstärkungsstoffe Chemie- und Naturfasern oder faserförmige Verstärkungsstoffe eingesetzt werden, vorzugsweise Glasfasern, Cellulosefasern, Kohlenstofffasern, Aramidfasern, Gesteinsfasern, oder die Fasern umfassende Gewebe, Matten, Vliese und Gewirke.

19. Verfahren nach einem der Ansprüche 6 bis 18, **dadurch gekennzeichnet, dass** als Katalysatoren Di-(tertiäramino)harnstoffe oder Bis-(dialkylaminoalkyl)harnstoff eingesetzt werden, vorzugsweise Bis-(dibutylaminopropyl)harnstoffe.

20. Verfahren nach einem der Ansprüche 6 bis 19, **dadurch gekennzeichnet, dass** das Polyurethanharz auf einen Härtungsgrad von 60 bis 85% vorgehärtet wird, mit einem Verstärkungsstoff vermischt und mit diesem gemeinsam dem Härtungsprozess unterworfen wird.

21. Verfahren nach einem der Ansprüche 6 bis 20, **dadurch gekennzeichnet, dass** das Polyurethanharz zum Vermischen mit Natur- und Chemiefasern z.B. auf ein entsprechendes Gewebe, eine Matte, oder ein Gewirk aufgebracht, durch Temperatureinwirkung in dieses eingeschmolzen und in einer zweiten Reaktionsstufe unter Einwirkung von einem Druck zwischen 0,1 und 100 Bar bei einer Temperatur von 75 bis 200°C innerhalb von 10 Minuten bis fünf Stunden ausgehärtet wird.

22. Verfahren nach einem der Ansprüche 6 bis 21, **dadurch gekennzeichnet, dass** die Polyurethanharze unter Einwirkung einer äußeren Kraft und bei einer Temperatur zwischen 10 und 85°C sowohl während Härtung als auch nach Aushärtung verstreckt werden.

23. Verfahren nach einem der Ansprüche 6 bis 22, **dadurch gekennzeichnet, dass**
eine Verstreckung mit einer Kraft von 1 bis 50% der Zugkraft beim Bruch durchgeführt wird.

24. Aromatisch-aliphatische Polyesteralkohole mit einer Molmasse von Mₙ 250 bis 750 sowie einer rechnerischen Funktionalität fₙ zwischen 2,01 und 2,3 bestehend aus
a) 25 bis 45 Gew. % mindestens einer aromatischen Dicarbonsäure,
b) 3 bis 22 Gew. % mindestens einer aliphatischen Dicarbonsäure,
c) 30 bis 72 Gew. % eines Diols oder mehrerer Diole,
d) 0,1 und 12 Gew. % eines Triols oder mehrerer Triole,
und die aliphatischen und aromatischen Dicarbonsäuren über die Diole statistisch in der Kette verteilt vorliegen und die Triole nur über die primären Hydroxylgruppen statistisch in der Kette verteilt sind, so dass die Hydroxylzahlen bei 150 bis 450 mg KOH/g liegen, wobei die Triole Glycerin, 1,3,6-Hexantriol, 1,2,6-Hexantriol, 1, 3, 8-Octantriol oder Gemische davon sind.

25. Polyesteralkohol gemäß Anspruch 24 hergestellt durch Vermischen der Komponenten a) bis d) in Gegenwart eines Veresterungskatalysators bei Temperaturen von 200 bis 260°C unter Schutzgasatmosphäre und Abdestillieren niedermolekularer Verbindungen innerhalb von 3 bis 8 Stunden.

## Claims

1. Polyurethane resins as a one or two-component system based on aromatic aliphatic polyester alcohols and di- and/or polyisocyanates, wherein the aromatic aliphatic polyester alcohols have a molar mass of Mₙ 250 to 750, as well as a calculated functionality fₙ between 2.01 and 2.3, and consist of:
a) 25 to 45% by weight of at least one aromatic dicarboxylic acid,
b) 3 to 22% by weight of at least one aliphatic dicarboxylic acid,
c) 30 to 72% by weight of a diol or several diols,
d) 0.1 and 12% by weight of a triol or several triols,
and the aliphatic and aromatic dicarboxylic acids are distributed statistically in the chain over the diols, and the triols are distributed statistically in the chain only over the primary hydroxyl groups so that the hydroxyl numbers are between 150 and 450 mg KOH/g, wherein the triols are selected from glycerin, 1,3,6-hexanetriol, 1,2,6-hexanetriol, 1,3,8- octanetriol or mixtures thereof.

2. Polyurethane resins according to claim 1, **characterized in that** the aromatic dicarboxylic acids are terephthalic acid, isophthalic acid or phthalic acid, or mixtures thereof.

3. Polyurethane resins according to claim 1 and 2, **characterized in that** the aliphatic dicarboxylic acids are adipic acid, succinic acid, azelaic acid, undecane diacid or mixtures thereof.

4. Polyurethane resins according to one of claims 1 to 3, **characterized in that** the diols are diethylene glycol, triethylene glycol, tetraethylene glycol, higher polyethylene glycols, or mixtures thereof.

5. Polyurethane resins according to one of claims 1 to 4, **characterized in that** the di- or respectively polyisocyanates are selected from 2,2'-diphenylmethane diisocyanate, 4,4'-diphenylmethane diisocyanate, 2,4-diphenylmethane diisocyanate, mixtures thereof, or polymer diphenylmethane diisocyanate with different isocyanate functionalities between 2.4 and 5.0.

6. A method to produce polyurethane resins according to one of claims 1 to 5, **characterized in that** aromatic aliphatic polyester alcohols are used, or respectively produced according to one of claims 1 to 4, mixed with one or more di- and/or polyisocyanates, and then the polyurethane resins are hardened, wherein the conversion is single-stage or multistage over defined temperature stages, wherein the triols are glycerin, 1,3,6-hexane triol, 1,2,6-hexane triol, 1,3,8-octane triol, or mixtures thereof.

7. The method according to claim 6, **characterized in that** the conversion occurs in the presence of reaction retarders, catalysts, additives and/or reinforcing agents.

8. The method according to one of claims 6 to 7, **characterized in that** the reaction is carried out at temperatures between 10 and 220°C within 10 minutes to 24 hours.

9. The method according to one of claims 6 to 8, **characterized in that** the polyester alcohols are pre-hardened with the di- and/or polyisocyanates at a temperature between 10°C and a temperature below the glass transition temperature Tg, shaped into the product, and then hardened at a temperature above Tg.

10. The method according to one of claims 6 to 9, **characterized in that** a degree of conversion of 65 to 95% is set by pre-hardening at a temperature up to below the glass transition temperature, and the product is changed into a desired shape and then hardened.

11. The method according to one of claims 6 to 10, **characterized in that** the reaction is single-stage, wherein the reaction components a) to d), optionally in the presence of an esterification catalyst, preferably 1 to 1500 ppm, at temperatures of 200 to 260°C, possibly under an inert gas atmosphere over 3 to 8 hours, are converted into a polyester alcohol and then converted into the final product with di- and/or polyisocyanates in an end group ratio of 0.75:1 to 1.25:1 in the presence of a reaction retarder.

12. The method according to one of claims 6 to 11, **characterized in that** a first component mixture is produced from polyester alcohol, reaction retarders, catalysts, additives and/or reinforcing agents that is mixed with the di- and/or polyisocyanates and hardened.

13. The method according to one of claims 6 to 12, **characterized in that** a component mixture is produced from 70 to 99.9 parts (% by weight) polyester alcohol, 0 to 0.7 parts reaction retarder, and 0 to 30 parts solid or liquid additive, and mixed with di- and/or polyisocyanates in an end group ratio of 1:1.15 to 0.85:1 of mixture to isocyanate and hardened.

14. The method according to one of claims 6 to 13, **characterized in that** for shaping, the product is mechanically deformed, comminuted, ground, or the physical appearance is modified by other method operations, and basically completely hardened after a storage time in a second step within 20 minutes to 10 hours at a temperature above the Tg.

15. The method according to one of claims 6 to 14, **characterized in that** organic phosphites, toluene sulfonic acid methyl ester or diketones such as acetyl acetone are used as the reaction retarder in an amount of 0.05 to 1.0% by weight, preferably acetyl acetone.

16. The method according to one of claims 6 to 15, **characterized in that** the reaction is carried out in the presence of additives in solid or liquid form, and/or reinforcing agents.

17. The method according to one of claims 6 to 16, **characterized in that** zeolites, chalks, calcite, barite, melamine, melamine cyanurate, aluminum oxide hydrate, magnesium oxide, magnesium hydroxide and/or barium sulfate are used as solid additives.

18. The method according to one of claims 6 to 17, **characterized in that** synthetic and natural fibers or fibrous reinforcing agents are used as reinforcing agents, preferably glass fibers, cellulose fibers, carbon fibers, aramid fibers, rock fibers or fabric, mats, fleeces and knits comprising fibers.

19. The method according to one of claims 6 to 18, **characterized in that** di-(tertiaryamino)urea or bis-(dialkylamino alkyl)urea are used as catalysts, preferably bis-(dibutylamino propyl)urea.

20. The method according to one of claims 6 to 19, **characterized in that** the polyurethane resin is pre-hardened to a degree of hardness of 60 to 85%, mixed with a reinforcing agent and subjected to the hardening process together with it.

21. The method according to one of claims 6 to 20, **characterized in that** the polyurethane resin is applied, for example to a corresponding fabric, a mat, or a knit, to mix with natural and synthetic fibers, melted therein under the effect of temperature and hardened in a second reaction step under the effect of pressure between 0.1 and 100 bar at a temperature of 75 to 200°C within 10 minutes to five hours.

22. The method according to one of claims 6 to 21, **characterized in that** the polyurethane resins are stretched under the effect of an external force and at a temperature between 10 and 85°C, both during hardening as well after hardening.

23. The method according to one of claims 6 to 22, **characterized in that** stretching is carried out with a force of 1 to 50% of the tensile force upon breakage.

24. Aromatic aliphatic polyester alcohols with a molar mass of Mn 250 to 750 and a calculated functionality fₙ between 2.01 and 2.3 consisting of:
a) 25 to 45% by weight of at least one aromatic dicarboxylic acid,
b) 3 to 22% by weight of at least one aliphatic dicarboxylic acid,
c) 30 to 72% by weight of a diol or several diols,
d) 0.1 and 12% by weight of a triol or several triols,
and the aliphatic and aromatic dicarboxylic acids are distributed statistically in the chain over the diols, and the triols are distributed statistically in the chain only over the primary hydroxyl groups so that the hydroxyl numbers are 150 and 450 mg KOH/g, wherein the triols are glycerin, 1,3,6-hexanetriol, 1,2,6-hexanetriol, 1,3,8- octanetriol or mixtures thereof.

25. A polyester alcohol according to claim 24 produced by mixing components a) to d) in the presence of an esterification catalyst at temperatures of 200 to 260°C under an inert gas atmosphere and distilling off low-molecular compounds within 3 to 8 hours.

## Revendications

1. Résines de polyuréthane en tant que système à un ou deux composants à base de polyesteralcools aromatico-aliphatiques et de di- et/ou polyisocyanates, les polyesteralcools aromatico-aliphatiques présentant une masse molaire de Mₙ 250 à 750 ainsi qu'une fonctionnalité arithmétique fₙ entre 2,01 et 2,3 et se composant de :
a) 25 à 45 % en poids d'au moins un acide dicarboxylique aromatique ;
b) 3 à 22 % en poids d'au moins un acide dicarboxylique aliphatique ;
c) 30 à 72 % en poids d'un diol ou de plusieurs diols ;
d) 0,1 à 12 % en poids d'un triol ou de plusieurs triols, et les acides dicarboxyliques aliphatiques et aromatiques étant présents répartis statistiquement dans la chaîne via les diols, et les triols étant répartis statistiquement dans la chaîne seulement via les groupes hydroxyle primaires, de telle sorte que les indices d'hydroxyle se situent entre 150 et 450 mg KOH/g, les triols étant choisis parmi le glycérol, le 1,3,6-hexanetriol, le 1,2,6-hexanetriol, le 1,3,8-octanetriol ou leurs mélanges.

2. Résines de polyuréthane selon la revendication 1, **caractérisées par le fait que** les acides dicarboxyliques aromatiques sont l'acide téréphtalique, l'acide isophtalique ou l'acide phtalique ou leurs mélanges.

3. Résines de polyuréthane selon l'une des revendications 1 et 2, **caractérisées par le fait que** les acides dicarboxyliques aliphatiques sont l'acide adipique, l'acide succinique, l'acide azélaïque, l'acide undécanedioïque ou leurs mélanges.

4. Résines de polyuréthane selon l'une des revendications 1 à 3, **caractérisées par le fait que** les diols sont le diéthylène glycol, le triéthylène glycol, le tétraéthylène glycol, les polyéthylène glycols supérieurs ou leurs mélanges.

5. Résines de polyuréthane selon l'une des revendications 1 à 4, **caractérisées par le fait que** les di- ou polyisocyanates sont choisis parmi le 2,2'-diphénylméthane diisocyanate, le 4,4'-diphénylméthane diisocyanate, le 2,4'-diphénylméthane diisocyanate, leurs mélanges, ou un diphénylméthane diisocyanate polymère de fonctionnalités isocyanate différentes entre 2,4 et 5,0.

6. Procédé de fabrication de résines de polyuréthane selon l'une des revendications 1 à 5, **caractérisé par le fait que** des polyesteralcools aromatico-aliphatiques selon l'une des revendications 1 à 4 sont utilisés ou fabriqués, mélangés avec un ou plusieurs di- et/ou polyisocyanates et par la suite les résines de polyuréthane sont durcies, la réaction ayant lieu en une seule étape ou en plusieurs étapes via des paliers de température définis, les triols étant le glycérol, le 1,3,6-hexanetriol, le 1,2,6-hexanetriol, le 1,3,8-octanetriol ou leurs mélanges.

7. Procédé selon la revendication 6, **caractérisé par le fait que** la réaction a lieu en présence de retardateurs de réaction, de catalyseurs, d'additifs et/ou de matières de renforcement.

8. Procédé selon l'une des revendications 6 et 7, **caractérisé par le fait que** la réaction est conduite à des températures entre 10 et 220°C en l'espace de 10 minutes à 24 heures.

9. Procédé selon l'une des revendications 6 à 8, **caractérisé par le fait que** les polyesteralcools sont pré-durcis avec les di- et/ou polyisocyanates à une température entre 10°C et une température au-dessous de la température de transition vitreuse Tg, façonnés en le produit et par la suite durcis à une température au-dessus de la Tg.

10. Procédé selon l'une des revendications 6 à 9, **caractérisé par le fait que**, par pré-durcissement à une température jusqu'à au-dessous de la température de transition vitreuse, un taux de conversion de 65 à 95 % est réglé, le produit est amené dans une forme souhaitée et ensuite durci.

11. Procédé selon l'une des revendications 6 à 10, **caractérisé par le fait que** la réaction a lieu en une seule étape, les composants de réaction a) à d) étant mis à réagir le cas échéant en présence d'un catalyseur d'estérification, de préférence 1 à 1 500 ppm, à des températures de 200 à 260°C, le cas échéant sous atmosphère de gaz protecteur en l'espace de 3 à 8 heures pour donner un polyesteralcool, et par la suite, étant mis à réagir avec des di- et/ou polyisocyanates dans le rapport de groupes terminaux 0,75:1 à 1,25:1 en présence d'un retardateur de réaction pour obtenir le produit final.

12. Procédé selon l'une des revendications 6 à 11, **caractérisé par le fait qu'**à partir du polyesteralcool, des retardateurs de réaction, des catalyseurs, des additifs et/ou des matières de renforcement, un premier mélange de composants est préparé, lequel est mélangé avec les di- et/ou polyisocyanates et durci.

13. Procédé selon l'une des revendications 6 à 12, **caractérisé par le fait qu'**à partir de 70 à 99,9 parties (% en poids) de polyesteralcool, 0 à 0,7 partie de retardateur de réaction et 0 à 30 parties d'additif solide ou liquide, un mélange de composants est préparé et est mélangé avec des di- et/ou polyisocyanates dans un rapport de groupes terminaux 1:1,15 à 0,85:1 mélange à isocyanate et est durci.

14. Procédé selon l'une des revendications 6 à 13, **caractérisé par le fait que** le produit est déformé mécaniquement pour le façonnage, fragmenté, broyé ou par d'autres opérations de traitement, l'aspect physique est modifié, et, le cas échéant, après un temps de stockage dans une deuxième étape, est sensiblement totalement durci en l'espace de 20 minutes à 10 heures à une température au-dessus de la Tg.

15. Procédé selon l'une des revendications 6 à 14, **caractérisé par le fait que**, comme retardateur de réaction, des phosphites organiques, de l'ester méthylique de l'acide toluène sulfonique ou des dicétones, comme, par exemple, l'acétylacétone, sont utilisés dans une quantité de 0,05 à 1,0 % en poids, de préférence l'acétylacétone.

16. Procédé selon l'une des revendications 6 à 15, **caractérisé par le fait que** la réaction est conduite en présence d'additifs sous forme solide ou liquide et/ou de matières de renforcement.

17. Procédé selon l'une des revendications 6 à 16, **caractérisé par le fait que**, comme additifs solides, des zéolithes, de la craie, de la calcite, de la baryte, de la mélamine, du cyanurate de mélamine, de l'hydrate d'oxyde d'aluminium, de l'oxyde de magnésium, de l'hydroxyde de magnésium et/ou du sulfate de baryum sont utilisés.

18. Procédé selon l'une des revendications 6 à 17, **caractérisé par le fait que**, comme matières de renforcement, des fibres chimiques et naturelles ou des matières de renforcement fibreuses sont utilisées, de préférence des fibres de verre, des fibres de cellulose, des fibres de carbone, des fibres d'aramide, des fibres de roches ou les tissus, mats, non-tissés et tissus tricotés comportant des fibres.

19. Procédé selon l'une des revendications 6 à 18, **caractérisé par le fait que**, comme catalyseurs, des di-(amino tertiaire)urées ou des bis-(dialkylaminoalkyl)urées sont utilisées, de préférence la bis-(dibutylaminopropyl)urée.

20. Procédé selon l'une quelconque des revendications 6 à 19, **caractérisé par le fait que** la résine de polyuréthane est pré-durcie à un degré de durcissement de 60 à 85 %, mélangée avec une matière de renforcement et est soumise conjointement avec celle-ci au processus de durcissement.

21. Procédé selon l'une des revendications 6 à 20, **caractérisé par le fait que** la résine de polyuréthane pour le mélange avec des fibres naturelles et chimiques par exemple est appliquée sur un tissu correspondant, un mat ou un tissu tricoté, fondue par l'action d'une température dans celui-ci et est durcie dans une seconde étape de réaction sous l'action d'une pression entre 0,1 et 100 bar à une température de 75 à 200°C en l'espace de 10 minutes à cinq heures.

22. Procédé selon l'une des revendications 6 à 21, **caractérisé par le fait que** les résines de polyuréthane sont étirées sous l'action d'une force externe et à une température entre 10 et 85°C non seulement pendant le durcissement mais encore après le durcissement.

23. Procédé selon l'une des revendications 6 à 22, **caractérisé par le fait qu'**un étirage est effectué avec une force de 1 à 50 % de la force de traction à la rupture.

24. Polyesteralcools aromatico-aliphatiques ayant une masse molaire de Mₙ 250 à 750 ainsi qu'une fonctionnalité arithmétique fₙ entre 2,01 et 2,3, se composant de :
a) 25 à 45 % en poids d'au moins un acide dicarboxylique aromatique ;
b) 3 à 22 % en poids d'au moins un acide dicarboxylique aliphatique ;
c) 30 à 72 % en poids d'un diol ou de plusieurs diols ;
d) 0,1 à 12 % en poids d'un triol ou de plusieurs triols, et les acides dicarboxyliques aliphatiques et aromatiques sont présents répartis statistiquement dans la chaîne via les diols, et les triols sont répartis statistiquement dans la chaîne seulement via les groupes hydroxyle primaires, de telle sorte que les indices d'hydroxyle se situent à 150 à 450 mg KOH/g, les triols étant le glycérol, le 1,3,6-hexanetriol, le 1,2,6-hexanetriol, le 1,3,8-octanetriol ou leurs mélanges.

25. Polyesteralcool selon la revendication 24, préparé par mélange des composants a) à d) en présence d'un catalyseur d'estérification à des températures de 200 à 260°C sous atmosphère de gaz protecteur et séparation par distillation des composés de faible masse moléculaire en l'espace de 3 à 8 heures.
